# EUROPEAN PATENT APPLICATION

(11) **EP 4 151 391 A1**
(43) Date of publication of application: **22.03.2023**
(21) Application number: 21461593.2
(22) Date of filing: 15.09.2021
(51) Int. Cl.: B29C 64/153, B22F 10/28, B22F 10/73, B29C 64/357, B33Y 10/00, B33Y 30/00

(54) **A PBF PRINTER WITH A POWDER CIRCULATION SYSTEM**

(71) Applicant: Sinterit Sp. z o.o., 30-741 Krakow (PL)
(72) Inventor: GRABOWSKI, Szymon, Krakow (PL)
(74) Representative: Kancelaria Eupatent.pl Sp. z.o.o

(57) **Abstract**

A powder bed fusion (PBF) printer, comprising: a housing with a printing chamber (10); an energy source (20); a printing bed (30) for supporting a printed object; a main powder container (40) for storing a powder; and a powder distribution unit (60) for distributing a layer of the powder on the previously processed layer. The printer further comprises a mechanical powder circulation system (50) comprising a screw conveyor mechanism for transferring the unused powder from the printing chamber (10) to the printing bed (30).

## Description

### TECHNICAL FIELD

The disclosed invention relates to a Powder Bed Fusion (PBF) printer with a powder circulation system.

### BACKGROUND

Powder Bed Fusion (PBF) 3D printing technique enables the manufacturing of a vast array of geometrically complex products using an energy source, such as laser or electron beams, to fuse powder particles layer-by-layer, therefore forming a solid part. There are different known techniques for printing 3D objects, by the PBF additive manufacturing process, for which different types of PBF 3D printers are used such as: Selective Laser Sintering (SLS) in which plastic powder is sintered, Selective Laser Melting (SLM) and Electron Beam Melting (EBM) in which metal powder is melted.

For example the Selective Laser Sintering (SLS) technique uses a laser as an energy source to sinter a powdered material (typically polyamide), aiming the laser automatically at points in space defined by a 3D model, thereby binding the material together to create a solid structure (a three-dimensional object).

A conventional SLS printer comprises a support (called a "bed") for a printed object on which a recoating roller spreads a thin layer of powder which is subsequently sintered by means of a laser according to layers sliced from a 3D model file.

Afterwards a platform (for example a piston) with the bed moves down by a distance equal to a thickness of a single layer and the process repeats until the last layer of the printed object is formed. After the printing process is finished, the obtained three-dimensional object is cooled down and removed from an unsintered powder suspension. The unsintered powder can be used for the next printing process.

For example a Chinese patent application CN111958971A discloses a powder feeding device for an SLS printer for manufacturing three-dimensional objects, comprising a powder storage groove, a powder feeding hopper, a powder feeding box, a powder feeding rotating shaft, a first gear, a second gear, a driving mechanism and a control system. The powder storage groove is orderly provided with at least one first feeding position switch and a first discharging position switch from the top to the bottom. The bottom of the powder feeding hopper is provided with a butterfly valve. The control system is controlling whether the powder falls to the powder storage groove. One end of the powder feeding rotating shaft is connected with the first gear and the second gear is connected with the driving mechanism, wherein the first gear is engaged with the second gear. As a result the driving mechanism actuates the powder feeding rotating shaft providing the powder from the powder storing groove to fall to the powder feeding box and falling to the powder feeding position through the outlet of the powder feeding box. The abovementioned device does not provide a system for recirculating the excessive powder back to the powder feeding hopper.

A Chinese patent application CN112387985A discloses a closed-loop powder circulation system used for additive manufacturing equipment, in particular for SLS printers, and a method of filtering the powder. The system comprises a powder storage tank, a fan, a separating tank, a vibration sieve, a controller and a powder returning tank. After the controller receives the powder feeding instruction it turns on the fan, so that the powder from the powder storage tank is conveyed to at least one powder feeding tank under the protection of the inert gas. Furthermore when the controller receives the powder returning instruction, it turns on the fan so that the powder from the powder returning tank and/or at least one powder overflowing cylinder is conveyed to the separating tank under the protection of the inert gas. After the separating process at the separating tank and the sieving process at the vibration sieve the powder is recycled to the powder storage tank. The disadvantage of the abovementioned system is the need for the separating tank and a complicated fan distribution system which needs to operate under the protection of the inert gas.

Therefore, there is a need to provide an improved PBF printer with a system for circulating the powder.

### SUMMARY OF THE INVENTION

The invention relates to a powder bed fusion (PBF) printer, comprising a housing with a printing chamber; an energy source; a printing bed for supporting a printed object; a main powder container for storing a powder; and a powder distribution unit for distributing a layer of the powder on the previously processed layer. The printer further comprises a mechanical powder circulation system comprising a screw conveyor mechanism for transferring the unused powder from the printing chamber to the printing bed.

The powder bed fusion printer with the mechanical circulation system allows to recirculate the unused powder back to the printing chamber. Use of the mechanical powder circulation system allows to maintain proper printing condition in the printing chamber, in particular concerning the temperature in the printing chamber which needs to be constant during the printing process. This is In contrast to prior art solutions of circulation systems, wherein powder is circulated within a stream of flowing air, which negatively influences the conditions in the printing chamber - this requires application of sophisticated temperature control systems for maintaining a constant temperature in the printing chamber. In the solution presented herein, the screw conveyor mechanism of the mechanical powder circulation system does not cause air flow that could affect the temperature within the printing chamber.

The printing chamber and the mechanical powder circulation system with the screw conveyor mechanism can be hermetically sealed from the outer environment to further increase the stability of conditions within the printing chamber.

The energy source used for processing the powder, in particular sintering or melting, may for example have a form of a laser source (in an SLS printer) or electron beam emitter (gun) (in a SLM or EBM printer).

The mechanical powder circulation system can be further configured to transport the powder from the main powder container to the printing bed. Adding fresh powder to unused powder at the screw conveyor mechanism facilitates mixing of the powders as they are transported along the screw conveyor. The unused powder is resupplied with fresh powder only in the amount needed to maintain substantially constant dosage of the powder into the printing chamber. It means that in the first place the unused powder form the previous cycle is resupplied to the printing chamber. It prevents the prolonged accumulation of the unused powder in the system, as the quality and physical properties of the powder which remains unused for a longer time might decrease, as it is prone to moisture absorption and agglomeration.

The mechanical powder circulation system may comprise a horizontal screw conveyor configured to transport powder to a powder transfer chamber and a vertical screw conveyor configured to transport powder from the powder transfer chamber wherein the horizontal screw conveyor is coupled to the vertical screw conveyor by means of the powder transfer chamber. Application of the horizontal screw conveyor and the vertical screw conveyor (instead of for example an inclined transport conveyor) allows to save space inside the printing machine.

An outlet of the main powder container can be located above the horizontal screw conveyor.

The mechanical powder circulation system may further comprise a secondary powder container for depositing the powder in front of the powder distribution unit, wherein the secondary powder container is located above the printing bed and wherein the vertical screw conveyor is configured to transfer the powder from the powder transfer chamber to the secondary powder container. By providing the secondary powder container above the printing bed, the main powder container may be positioned in a location which is more convenient for its refilling with powder. This allows positioning the main powder container much lower than the secondary powder container, almost at a floor level, therefore the user does not have to lift up heavy boxes with powder at a great height in order to refill the printing machine.

The mechanical powder circulation system may further comprise a first unused powder chute for transferring the unused powder from the first side of the printing chamber to the horizontal screw conveyor, wherein an outlet of the first unused powder chute is located in front of the outlet of the main powder container. The average amount of unused powder (recovered from the printing chamber) used during the printing process shall be preferably between 70-90%, while the average amount of fresh powder used during the printing process shall be preferably between 30-10%.

The mechanical powder circulation system may further comprise a second unused powder chute for transferring the unused powder from the second side of the printing chamber to the main powder container.

The secondary powder container may comprise a powder level sensor configured to actuate the mechanical powder circulation system when the powder level in the secondary powder container is below a predefined threshold. The powder level sensor helps to maintain an optimal amount of powder in the secondary powder container. In particular the powder level sensor prevents from overfilling the secondary powder container by stopping the mechanical powder circulation system when the powder level in the secondary powder container is above a predefined level and prevents powder shortages in the secondary powder container by actuating the mechanical powder circulation system when the powder level in the secondary powder container is below a predefined threshold. The powder level sensor may be a capacitive proximity sensor. This allows to control the mechanical circulation system by means of just a single sensor located at the secondary powder container. No further sophisticated control mechanisms are needed.

The secondary powder container may comprise a vibrating unit for inducing vibrations to the powder located in the secondary powder container. The vibrating unit helps to prevent powder jamming or creation of so called "rat holes" in the secondary powder container. Therefore the amount of powder deposited in each printing cycle is maintained substantially at the constant level.

The rotational speed of the vertical screw conveyor can be from 1.2 to 4 times greater than the rotational speed of the horizontal screw conveyor. Application of different rotational speed values for the vertical screw conveyor with respect to the horizontal screw conveyor prevents powder jamming in the powder transfer chamber. This is particularly useful if the physical parameters of the horizontal screw conveyor and the vertical screw conveyor, such as diameter, screw pitch are to be the same, and therefore the efficiency of the vertical screw conveyor is made greater than the efficiency of the horizontal screw conveyor by adjusting its rotational speed.

The outlet of the main powder container may comprise a sieve and/or the outlet of the first unused powder chute may comprise a sieve. The sieves prevent any contaminations, such as melted powder or fragments of the printed part, from falling into the horizontal screw conveyor.

The mechanical powder circulation system may further comprise a transfer chute located between an outlet of the vertical screw conveyor and the secondary powder container. The transfer chute allows for gravitational transferring of the powder from the vertical screw conveyor to the secondary powder container. During the transfer through the transfer chute the powder becomes loose again after it is transferred by the screw conveyors.

The invention also relates to a method of printing by means of a PBF printer as described herein, comprising recirculating the unused powder from the printing chamber to the printing bed by the mechanical powder circulation system.

In particular, the method may comprise the steps of: depositing a dose of powder from the secondary powder container in front of the powder distribution unit; forming a layer of powder on the previously processed layer by means of the powder distribution unit; collecting unused powder from the printing chamber by means of the first unused powder chute; transferring the collected unused powder by means of the horizontal screw conveyor to the powder transfer chamber and simultaneously collecting the powder from the main powder container to completely fill the end part of the horizontal screw conveyor and the powder transfer chamber; and transferring the powder from the powder transfer chamber to the secondary powder container.

The method may further comprise the step of collecting the unused powder from the printing chamber to the main powder container by means of a second unused powder chute.

Owing to the mechanical circulation system used in the PBF printer as presented herein, the unused powder is automatically transferred back to the printing chamber. Therefore the operator does not need to manually remove the unused powder from the printing chamber. Thus the printing chamber remains hermetical and powder does not escape from the printing chamber. As a result it is easier to maintain clean work space around the printing machine, while at the same time operators have less contact with the powder (in particular the operators are less prone to inhaling the powder, due to its flour like consistency which is generally harmful).

These and other features, aspects and advantages of the invention will become better understood with reference to the following drawings, descriptions and claims.

### BRIEF DESCRIPTION OF DRAWINGS

The disclosed invention is shown by means of preferred embodiments in a drawing, wherein:
Fig. 1A presents a selective laser sintering printer with a powder circulation system in a front view;
Fig. 1B presents a selective laser sintering printer with a powder circulation system in an isometric view;

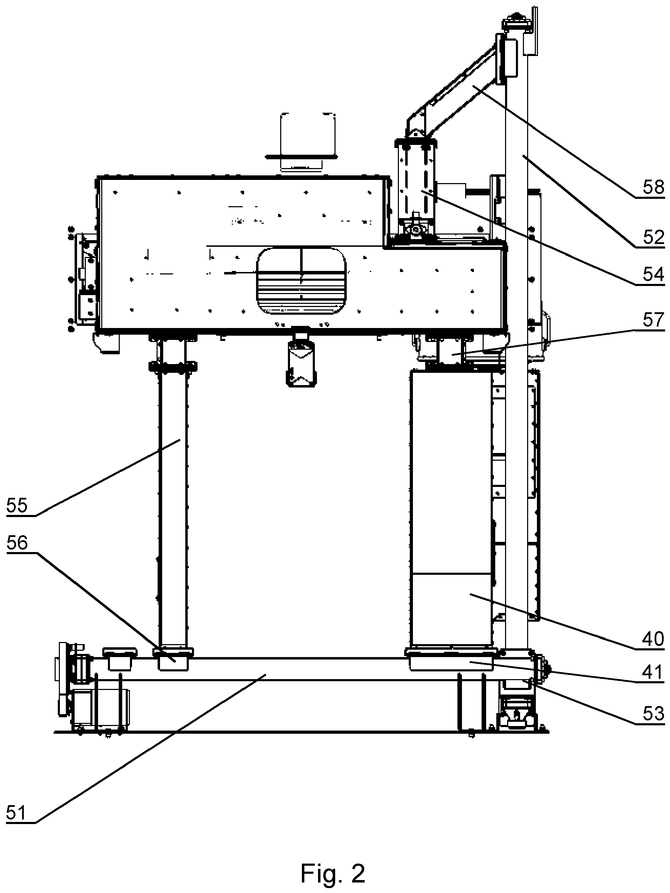

Fig. 2 presents the powder circulation system;

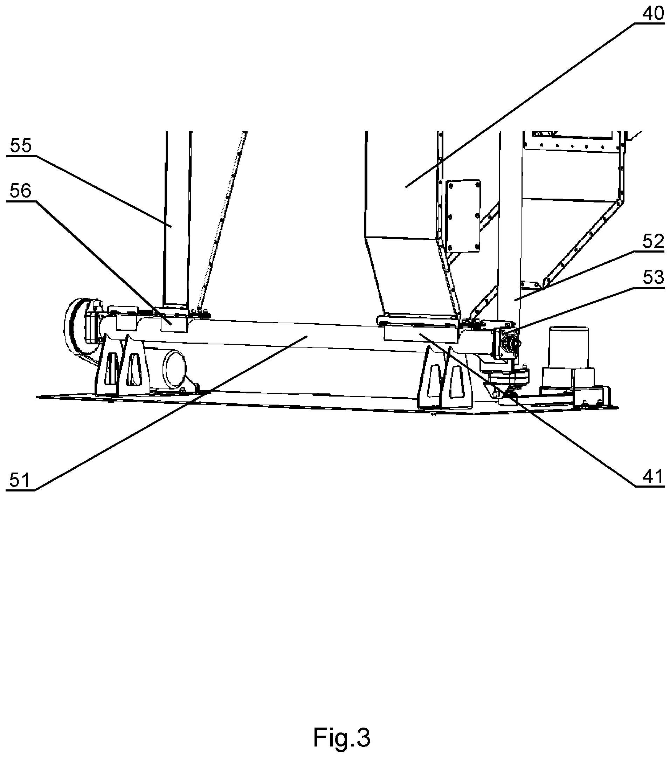

Fig. 3 presents a horizontal screw conveyor with powder chutes outlets;

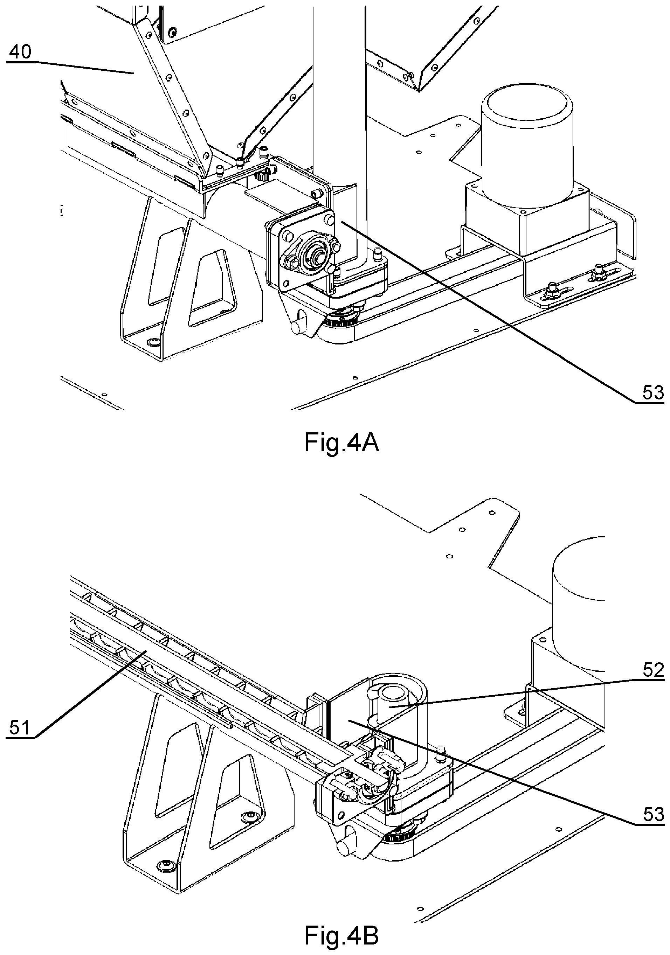

Fig. 4A presents a transfer chamber;
Fig. 4B presents the transfer chamber in a cross-section view;

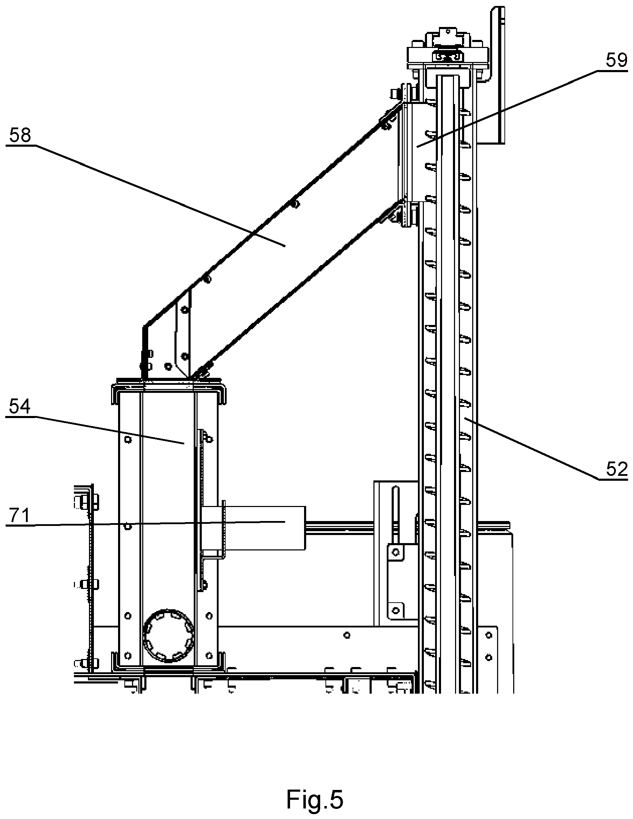

Fig. 5 presents a secondary powder container with a transfer chute.

### DETAILED DESCRIPTION OF EMBODIMENTS

The description presented herein is not to be taken in a limiting sense, but is made merely for the purpose of illustrating the general principles of the invention.

The following detailed description relates to a Selective Laser Sintering (SLS) printer but it can be equivalently applied to other types of PBF printers as well, in particular to Selective Laser Melting (SLM) or Electron Beam Melting (EBM).

The embodiment presented herein contains all features foreseen by the present disclosure. However, other embodiments are feasible as well that do not contain all features necessary to achieve particular technical advantages corelated with such feature.

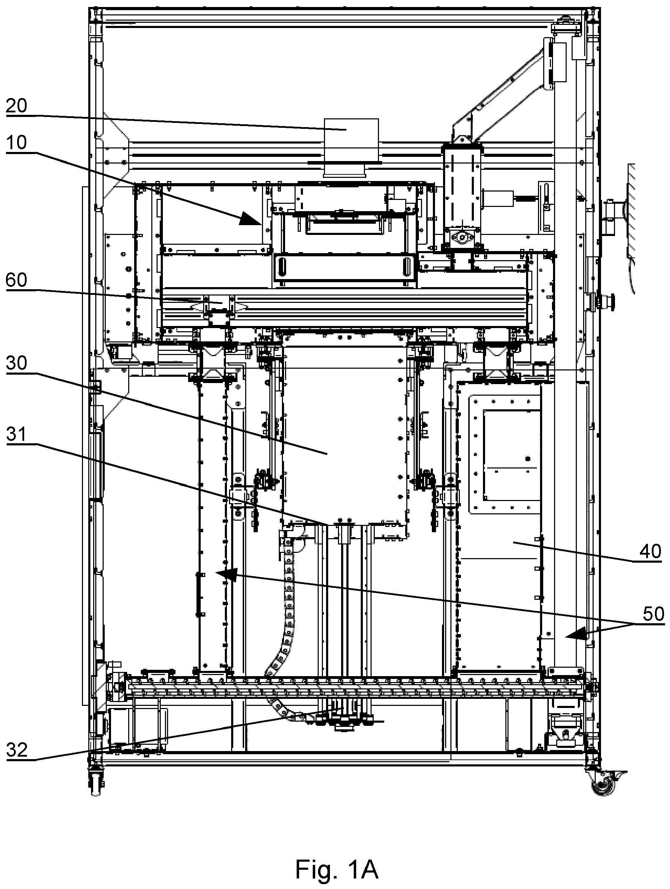

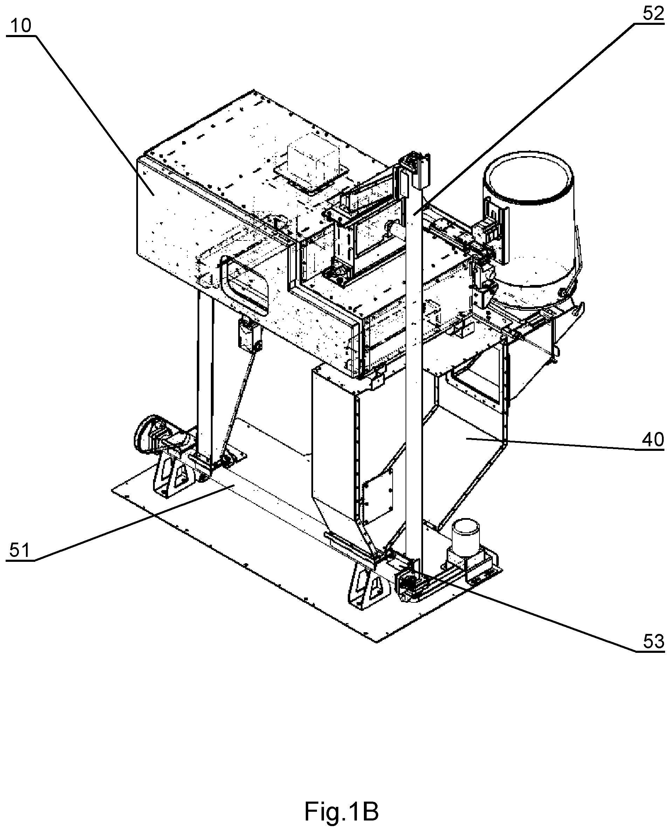

The SLS printer, as shown in Figs. 1A-1B, has a housing with a printing chamber 10. A laser 20 is used as an energy source for sintering. The object being printed is supported by a printing bed 30 to which powder is supplied by a powder distribution unit 60. The powder distribution unit 60, also called a recoater, is located in the printing chamber and distributes the powder as successive layers applied onto the previously processed (sintered) layer. The powder that is supplied to the printing bed is both fresh powder from a main powder container 40 and unused powder from the printing chamber, that is fed by a mechanical powder circulation system 50.

In the presented embodiment, the mechanical powder circulation system 50 is configured to transport both the unused powder and the fresh powder from the main powder container 40 to the printing bed 30.

The mechanical powder circulation system 50 comprises a horizontal screw conveyor 51 configured to transport powder to a powder transfer chamber 53 and a vertical screw conveyor 52 configured to transport powder from the powder transfer chamber 53. Therefore, the powder transfer chamber 53 functions to couple the horizontal screw conveyor 51 with the vertical screw conveyor 52 in terms of their powder transmission capability. The powder transfer chamber 53 should be supplied with powder in an amount such as to maintain its constant filling so that the vertical screw conveyor 52 can operate properly. Shortages of powder in the powder transfer chamber 53 (such that the powder transfer chamber is not completely filled with powder) should be avoided, such as not to cause problems in collecting the powder by the vertical screw conveyor 52 from the transfer chamber 53.

The unused powder is transferred to the horizontal screw conveyor 51 from a first side of the printing chamber 10 by a first unused powder chute 55. An outlet 56 of the first unused powder chute 55 is located in front of an outlet 41 of the main powder container 40, i.e. upstream the path of powder transmission along the horizontal screw conveyor 51, so that the horizontal screw conveyor is fed first by the unused powder.

Therefore, the powder to the horizontal screw conveyor 51 is further supplied from the outlet 41 of the main powder container 40, that is located above the horizontal screw conveyor 51. Therefore, the powder from the main powder container 40 is transferred to the horizontal screw conveyor 51 by means of gravity and by rotating motion of the horizontal screw conveyor 51.

Furthermore, a second unused powder chute 57 is provided for transferring the unused powder from the second side of the printing chamber 10 to the main powder container 40.

The outlets 41, 56 of the main powder container 50 and of the first unused powder chute 55, respectively, each contain a sieve for filtering contaminations.

A secondary powder container 54 is provided for depositing the powder in front of the powder distribution unit 60. The secondary powder container 54 is located above the printing bed 30 and the vertical screw conveyor 52 is configured to transfer the powder from the powder transfer chamber 53 to the secondary powder container 54. A transfer chute 58 is located between an outlet 59 of the vertical screw conveyor 52 and the secondary powder container 54. The secondary powder container 54 is smaller than the main powder container 40. The main powder container 40 is located almost at a floor level, much lower than the secondary powder container 54.

Therefore, the horizontal screw conveyor 51 is initially filled with the unused powder transferred by the first unused powder chute 55. Subsequently, the powder is transferred towards the outlet 41 region of the main powder container 40. The remaining space in the horizontal screw conveyor 51 is filled with the powder from the main powder container 40.

During powder distribution, the powder distribution unit 60 is moved from the first side of the printing chamber 10 to the second side of the printing chamber 10 and back to the first side of the printing chamber 10. As a result a new layer of powder (usually having a thickness from 50 to 150µm) is spread on the previously processed (for example sintered or melted) layer. During such cycle the excess of the powder (i.e. the unused powder) is pushed by the powder distribution unit 60 to both sides of the printing chamber 10, from where it is gravitationally transferred to the horizontal screw conveyor 51. From the first side of the printing chamber 10 the unused powder is transferred directly to the horizontal screw conveyor 51 by means of the first unused powder chute 55. From the second side of the printing chamber 10 the unused powder is transferred by the second unused powder chute 57 first to the main powder container 40 where it is mixed with a fresh powder and is further transferred to the horizontal screw conveyor 51.

The vertical screw conveyor 52 rotates with a speed 2 times greater than the rotational speed of the horizontal screw conveyor 51. The conveyors 51, 52 have the same diameter and screw pitch.

Application of different rotational speed values for the vertical screw conveyor 52 with respect to the horizontal screw conveyor 51, wherein the rotational speed of the vertical screw conveyor 52 is from 1.2 to 4 times greater than the rotational speed of the horizontal screw conveyor 51 prevents powder jamming in the powder transfer chamber 53. Preferably the physical parameters of the horizontal screw conveyor 51 and the vertical screw conveyor 52, such as diameter, screw pitch are the same. Taking into account only physical properties of the conveyors, due to their horizontal and vertical alignment the horizontal screw conveyor 51 has greater efficiency than the vertically aligned screw conveyor 52. In order to prevent the powder jamming, the resulting efficiency of the vertical screw conveyor 52 needs to be higher than the efficiency of the horizontal screw conveyor 51. This is achieved by adjusting their rotational speeds as defined above.

The secondary powder container 54 comprises a capacitive proximity sensor configured to sense the level of powder within the secondary powder container 54 and to actuate the mechanical powder circulation system 50 when the powder level in the secondary powder container 54 is below a predefined threshold.

Furthermore, the secondary powder container 54 comprises a vibrating unit 71 for inducing vibrations to the powder located in the secondary powder container 54.

The PBF printer as described herein operates as follows. First, a dose of powder is deposited from the secondary powder container 54 in front of the powder distribution unit 60. Then, a layer of powder is formed on the previously processed layer by means of the powder distribution unit 60. The unused powder is collected from the printing chamber 10 by means of the first unused powder chute 55. The unused powder from the printing chamber 10 is also collected to the main powder container 40 by means of a second unused powder chute 57. That collected unused powder is transferred by means of the horizontal screw conveyor 51 to the powder transfer chamber 53 and simultaneously powder is collected from the main powder container 40 to completely fill the end part of the horizontal screw conveyor 51 and the powder transfer chamber 53. Finally, the powder is transferred from the powder transfer chamber 53 to the secondary powder container 54.

Owing to the mechanical circulation system used in the PBF printer as presented in the present disclosure, the unused powder is automatically transferred back to the printing chamber 10. Therefore the operator does not need to manually remove the unused powder from the printing chamber. Thus the printing chamber remains hermetical and powder does not escape from the printing chamber. As a result it is easier to maintain clean work space around the printing machine, while at the same time operators have less contact with the powder (in particular the operators are less prone to inhaling the powder, due to its flour like consistency which is generally harmful).

Moreover the further advantage of the presented mechanical circulation system is its simplicity. The mechanical circulation system may generally be controlled just by a single sensor located at the secondary powder container. No further sophisticated control mechanisms are needed.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A powder bed fusion (PBF) printer, comprising:
- a housing with a printing chamber (10);
- an energy source (20);
- a printing bed (30) for supporting a printed object;
- a main powder container (40) for storing a powder; and
- a powder distribution unit (60) for distributing a layer of the powder on the previously processed layer;
**characterized in that** the printer further comprises:
- a mechanical powder circulation system (50) comprising a screw conveyor mechanism for transferring the unused powder from the printing chamber (10) to the printing bed (30).

2. The PBF printer according to claim 1, wherein the mechanical powder circulation system (50) is further configured to transport the powder from the main powder container (40) to the printing bed (30).

3. The PBF printer according to any of previous claims, wherein the mechanical powder circulation system (50) comprises a horizontal screw conveyor (51) configured to transport powder to a powder transfer chamber (53) and a vertical screw conveyor (52) configured to transport powder from the powder transfer chamber (53) wherein the horizontal screw conveyor (51) is coupled to the vertical screw conveyor (52) by means of the powder transfer chamber (53).

4. The PBF printer according to claim 3, wherein an outlet (41) of the main powder container (40) is located above the horizontal screw conveyor (51).

5. The PBF printer according to claim 3 or 4, wherein the mechanical powder circulation system (50) further comprises a secondary powder container (54) for depositing the powder in front of the powder distribution unit (60), wherein the secondary powder container (54) is located above the printing bed (30) and wherein the vertical screw conveyor (52) is configured to transfer the powder from the powder transfer chamber (53) to the secondary powder container (54).

6. The PBF printer according to claim 5, wherein the mechanical powder circulation system (50) further comprises a first unused powder chute (55) for transferring the unused powder from the first side of the printing chamber (10) to the horizontal screw conveyor (51), wherein an outlet (56) of the first unused powder chute (55) is located in front of the outlet (41) of the main powder container (40).

7. The PBF printer according to claim 6, wherein the mechanical powder circulation system (50) further comprises a second unused powder chute (57) for transferring the unused powder from the second side of the printing chamber (10) to the main powder container (40).

8. The PBF printer according to any of claims 5 to 7, wherein the secondary powder container (54) comprises a powder level sensor configured to actuate the mechanical powder circulation system (50) when the powder level in the secondary powder container (54) is below a predefined threshold.

9. The PBF printer according to any of claims 5 to 8, wherein the secondary powder container (54) comprises a vibrating unit (71) for inducing vibrations to the powder located in the secondary powder container (54).

10. The PBF printer according to any of claims 3 to 9, wherein the rotational speed of the vertical screw conveyor (52) is from 1.2 to 4 times greater than the rotational speed of the horizontal screw conveyor (51).

11. The PBF printer according to any of claims 3 to 10, wherein the outlet (41) of the main powder container (40) comprises a sieve.

12. The PBF printer according to any of claims 5 to 11, wherein the outlet (56) of the first unused powder chute (55) comprises a sieve.

13. The PBF printer according to any of claims 5 to 12, wherein the mechanical powder circulation system (50) further comprises a transfer chute (58) located between the secondary powder container (54) and an outlet (59) of the vertical screw conveyor(52).

14. A method for printing by means of a PBF printer according to any of previous claims, the method comprising recirculating the unused powder from the printing chamber (10) to the printing bed (30) by the mechanical powder circulation system (50).

15. The method according to claim 14, comprising:
- depositing a dose of powder from the secondary powder container (54) in front of a powder distribution unit (60);
- forming a layer of powder on the previously processed layer by means of the powder distribution unit (60);
- collecting an unused powder from the printing chamber (10) by means of first unused powder chute (55);
- transferring the collected unused powder by means of the horizontal screw conveyor (51) to the powder transfer chamber (53) and simultaneously collecting the powder from the main powder container (40) to completely fill the end part of the horizontal screw conveyor (51) and the powder transfer chamber (53); and
- transferring the powder from the powder transfer chamber (53) to the secondary powder container (54).
